Europäisches Patentamt

European Patent Office

Office européen des brevets

(11) Veröffentlichungsnummer: **0 456 902 B1**

## EUROPÄISCHE PATENTSCHRIFT

(45) Veröffentlichungstag der Patentschrift: **21.09.94**

(21) Anmeldenummer: **90124034.1**

(22) Anmeldetag: **13.12.90**

(51) Int. Cl.5: **B60C 1/00**, C08L 21/00, //(C08L21/00,9:00)

(54) **3,4-Polyisopren enthaltende Kautschukverschnitt-Mischungen für Reifenlaufflächen.**

(30) Priorität: **18.05.90 DE 4016079**

(43) Veröffentlichungstag der Anmeldung:
**21.11.91 Patentblatt 91/47**

(45) Bekanntmachung des Hinweises auf die
Patenterteilung:
**21.09.94 Patentblatt 94/38**

(84) Benannte Vertragsstaaten:
**AT BE CH DE ES FR GB IT LI LU NL SE**

(56) Entgegenhaltungen:
DE-A- 3 720 461
DE-A- 3 835 792

KAUTSCHUK + GUMMI KUNSTSTOFFE, Band
43, Nr. 9, September 1990, Seiten 755-766,
Heidelberg, DE; K.H. NORDSIEK et al.: "High
Tg polyisoprenes for superior wet grip of
tire treads"

(73) Patentinhaber: **HÜLS AKTIENGESELLSCHAFT**

**D-45764 Marl (DE)**

(72) Erfinder: **Wolpers, Jürgen, Dr.**
**Hetfeld 15 c**
**W-4358 Haltern (DE)**
Erfinder: **Fuchs, Hans-Bernd, Dr.**
**Leverkusener Strasse 12**
**W-4370 Marl (DE)**
Erfinder: **Herrmann, Christoph, Dr.**
**Siedlungsstrasse 3**
**W-4370 Marl (DE)**
Erfinder: **Hellermann, Walter, Dr.**
**Händelstrasse 129 a**
**W-4270 Dorsten (DE)**
Erfinder: **Nordsiek, Karl-Heinz, Dr.**
**Neumarkstrasse 4**
**W-4370 Marl (DE)**

EP 0 456 902 B1

**Beschreibung**

Bedingt durch die Fortschritte im Straßenfahrzeugbau werden die Anforderungen an die Fahreigenschaften der Reifen immer höher. An erster Stelle steht hierbei die Forderung nach größtmöglicher Sicherheit im Straßenverkehr, die mit der Eigenschaft der Rutschfestigkeit, insbesondere der Naßrutschfestigkeit der Reifenlaufflächen in engem Zusammenhang steht. Ebenso wird jedoch ein möglichst hoher Abriebwiderstand gefordert, um dem Reifen eine entsprechende Lebensdauer zu geben. Überdies soll sowohl aus wirtschaftlicher als auch aus umweltpolitischer Sicht der Rollwiderstand der Reifen und damit der Treibstoffverbrauch des Fahrzeugs niedrig gehalten werden.

Diese Anforderungen an moderne Fahrzeugreifen sind nun bekanntermaßen gegenläufig, d. h. eine Erhöhung der Rutschfestigkeit zieht eine Verschlechterung des Abriebs bzw. des Rollwiderstands nach sich. Die meisten der bisher vorgeschlagenen Maßnahmen zur Verbesserung der Rutschfestigkeit haben den Nachteil, daß sie auf Kosten der ebenso wichtigen Eigenschaften Abrieb und Rollwiderstand gehen. Es besteht daher ein Bedarf an Kautschukmischungen mit verbesserten Eigenschaften.

So ist beispielsweise die Erhöhung der Rutschfestigkeit durch Einsatz von Kautschukpolymeren mit erhöhter Glasübergangstemperatur (Tg), wie z. B. Styrol-Butadien-Kautschuke mit erhöhtem Styrolgehalt, bekannt. Diese können entweder als alleinige Kautschukbasis oder im Verschnitt mit herkömmmlichen Dienkautschuken eingesetzt werden. Eine gewisse Verbesserung hinsichtlich des Rollwiderstands erzielt man durch Einsatz von Hoch-Tg-Kautschukpolymeren mit niedrigen Styrol- und erhöhten Vinyl-Gehalten, die durch moderne Lösungspolymerisation mit Li-Katalysatoren zugänglich sind. Die Schere zwischen den gegenläufigen Eigenschaften Rutschfestigkeit und Abriebwiderstand kann man jedoch auf diese Weise nicht überwinden.

Es wurde nun überraschend gefunden, daß durch die erfindungsgemäße 3,4-Polyisopren enthaltende Kautschukverschnitt-Mischung eine optimale Verbesserung der Rutschfestigkeit bei ausgewogenen und akzeptablen Abriebs- und Rollwiderstandseigenschaften erreicht wird.

Das Polyisopren muß dabei hinsichtlich

1. des 3,4-Gehalts,
2. der Glasübergangstemperatur,
3. der Molmasse,
4. der Molmassenverteilung und
5. der Langkettenverzweigung

ganz bestimmten, für den Fachmann nicht naheliegenden, Bedingungen genügen.

Der 3,4-Gehalt des Polyisoprens beträgt 55 bis 75, vorzugsweise etwa 60 %, bestimmt durch NMR-Spektroskopie. Ein Maß für diesen 3,4-Gehalt ist auch die Glasübergangstemperatur Tg. Ein 3,4-Gehalt des Polyisoprens von etwa 60 % entspricht einer Glasübergangstemperatur von etwa -8 °C. Der bevorzugte Bereich der Glasübergangstemperatur sollte einen Wert, gemessen nach der DSC-Methode, bei einem Temperaturanstieg von 10 Kelvin/min, von -5 °C nicht übersteigen und einen solchen von -16 °C nicht unterschreiten.

Die Eingrenzung des Tg-Bereichs ist aus folgenden Gründen notwendig:

3,4-Polyisopren als Verschnittkomponente kann nur dann zur Rutschfestigkeit entscheidend beitragen, wenn seine Glasübergangstemperatur möglichst hoch ist. Versuche belegen, daß bei Tg-Werten von 0 bis -25 °C die Rutschfestigkeit noch in meßbarem Umfang verbessert wird. Um jedoch eine gute Rutschfestigkeit bei den beanspruchten 3,4-Polyisopren-Mengenanteilen zu erzielen, sollte der Tg im Bereich von -5 bis -16 °C liegen.

Bei Glasübergangstemperaturen über 0 °C nach DSC läßt die Covulkanisation des 3,4-Polyisoprens mit herkömmlichen Kautschuken merklich nach, so daß kein einheitlich vulkanisiertes Elastomer mehr herzustellen ist. Deshalb sollte die Glasübergangstemperatur nicht über 0 °C liegen.

Auch molekulare Strukturparameter haben überraschenderweise einen Einfluß auf die rutschfestigkeitssteigernde Wirkung von 3,4-Polyisopren als Verschnittkomponente. So darf die Molmasse nicht zu niedrig sein. Der numerische Mittelwert der Molmasse sollte nicht unter 220 000 liegen. Das Maximum der Molmasse, ermittelt durch Gelchromatographie, sollte mindestens 200 000 betragen. Ferner sollte die Uneinheitlichkeit U, definiert durch $U = \overline{M}w/\overline{M}n - 1$, höchstens 1,6 betragen ($\overline{M}w$ = Gewichtsmittel, $\overline{M}n$ = Zahlenmittel der Molmasse). Bei einer zu breiten Molmassenverteilung entsprechend einer hohen Uneinheitlichkeit wird ebenfalls die Naßrutschfestigkeit beeinträchtigt.

Kautschuke mit Langkettenverzweigung weisen gegenüber ihren Homologen mit linearer Struktur Vorteile auf (vgl. EP-OS 0 090 365). Man erhält sie, indem man die Dienmonomeren zu sog. "lebenden Polymeren" und diese anschließend mit Kupplungsmitteln, wie z. B. Polyhalogenverbindungen oder Divinylaromaten, umsetzt.

2

Das Verschnittverhältnis des 3,4-Polyisoprens zu herkömmlichen Kautschuken sollte maximal 35 : 65 Gewichtsteile betragen. Vorzugsweise, gerade auch im Hinblick auf die Beibehaltung eines guten Rollwiderstands und Abriebniveaus, ist ein Anteil von 5 bis 20 Teilen 3,4-Polyisopren zu 95 bis 80 Teilen Hauptkomponente optimal. Ein zu hoher Anteil 3,4-Polyisopren im Verschnitt führt dazu, daß die Laufflächenmischung bei tiefen Temperaturen, bei unter 0 °C, zu stark verhärtet und im Winterbetrieb brüchig werden kann.

In den EP-PSS 0 053 763 und 0 054 204 werden zwar schon 3,4-Polyisopren/Kautschuk-Verschnitte für Reifenlaufflächen und für Dämpfungselemente eingesetzt, aber diese Mischungen weisen noch folgende Nachteile auf:

So braucht man für eine wirksame Erhöhung der Dämpfung und damit der Rutschfestigkeit der Reifenlauffläche einen möglichst hohen 3,4-Gehalt, Das führt allerdings dazu, daß aufgrund der hohen Glasübergangstemperatur das 3,4-Polyisopren nicht mehr als alleinige Kautschukbasis eingesetzt werden kann.

Weiter werden in der EP-PS 0 053 763 alle Polyisoprene mit mehr als 15 % 3,4-Gehalt als gleichermaßen geeignet angesehen. Vorzugsweise wird ein 3,4-Gehalt von 25 bis 50 % beansprucht. Der Vorzugsbereich des erfindungsgemäß eingesetzten Polyisoprens liegt jedoch bei 60 %, womit optimale Reifeneigenschaften erzielt werden.

Auch der Einfluß der Molmasse und der Molmassenverteilung des einzusetzenden Polyisoprens auf die Reifeneigenschaften kann in keiner Weise diesen Druckschriften entnommen werden, da dieser Zusammenhang dort nicht erkannt wird.

Experimenteller Teil

Herstellung des erfindungsgemäßen Polyisoprens

Als Lösemittel wurde ein Kohlenwasserstoffgemisch eingesetzt, das zu etwa 50 % aus Hexan bestand. Weitere Bestandteile dieses hydrierten $C_6$-Schnittes waren insbesondere Pentan, Heptan und Oktan sowie deren Isomere. Das Lösemittel wurde über einem Molekularsieb der Porenweite 0,4 nm getrocknet, so daß der Wasseranteil unter 10 ppm gesenkt wurde, und anschließend mit $N_2$ gestrippt.

Die organische Lithiumverbindung war n-Butyllithium, die in Form einer 20gewichtsprozentigen Lösung in Hexan zur Anwendung kam.

Isopren wurde vor seinem Einsatz 24 Stunden über Calciumhydrid unter Rückfluß gekocht, abdestilliert und mit n-Butyllithium in Gegenwart von o-Phenanthrolin austitriert. Als Cokatalysator wurden Mikrostrukturregler der Formel $R_1$-O-$CH_2$-$CH_2$-O-$R_2$ mit Alkylresten unterschiedlicher Anzahl von C-Atomen und einer Summe der C-Atome zwischen 5 und 7 eingesetzt.

Die Glykolether wurden über Calciumhydrid destilliert und anschließend mit n-Butyllithium in Gegenwart von o-Phenanthrolin austitriert.

Das Divinylbenzol wurde in Form eines Isomerengemisches aus 64 % m- und 36 % p-Divinylbenzol nach Trocknung über Aluminiumoxid eingesetzt.

In einem mit trockenen Stickstoff gespülten V2A-Rührautoklaven wurden 1,5 kg $C_6$-Kohlenwasserstoffgemisch, 200 g Isopren und der jeweilige Cokatalysator bei 50 °C vorgelegt. Die Menge des Cokatalysators ergibt sich aus den jeweils angegebenen Massenverhältnissen von Katalysator und Cokatalysator. Die Polymerisation wurde durch Zugabe von 2,5 m Mol n-Butyllithiumlösung gestartet und isotherm gehalten. Nach 2 Stunden wurde Divinylbenzol zugesetzt.

Das erhaltene Polymere wird, bezogen auf 100 Teile Isopren, mit 0,5 Teilen 2,2'-Methylen-bis-(4-methyl-6-tert.-butylphenol) stabilisiert, mit 2 500 ml eines Gemisches aus Isopropanol und Methanol im Volumenverhältnis von 80 : 20 gefällt und bei 50 °C getrocknet.

Als Kupplungsausbeute wird der Prozentanteil an Kautschuk angesehen, der nach der Umsetzung mit einem Kupplungsmittel eine sternförmige Struktur aufweist und sich gegenüber dem ungekuppelten Kautschuk durch ein erheblich höheres Molekulargewicht auszeichnet. Die Bestimmung erfolgt mit GPC-Analyse, wobei Tetrahydrofuran als Lösemittel und Polystyrol als Säulenmaterial eingesetzt wird. Die Polymerisate werden mit einem Lichtstreuungsdetektor charakterisiert. Zu diesem Zweck werden dem Reaktor vor Zugabe des Kupplungsmittels und zu Ende der Reaktion Proben entnommen.

Die Mikrostruktur wird mit Hilfe des NMR-Spektrums bestimmt.

Neben den Kautschukbestandteilen besteht die Reifenlauffläche üblicherweise aus 50 bis 90 Teilen eines geeigneten Ofenrußes sowie aus 5 bis 45 Teilen eines Öls, beides bezogen auf 100 Gewichtsteile Kautschuk. Ferner besteht die Mischung aus den üblichen Additiven, wie Zinkoxid, Stearinsäure, Antioxidantien sowie Schwefel und Beschleuniger.

Bei der Herstellung der Mischung kommt es zur optimalen Verbesserung der Rutscheigenschaften darauf an, daß die die Rutschfestigkeit verbessernde Komponente, das erfindungsgemäße 3,4-Polyisopren, eine separate Domäne ausbildet, um als Antirutsch-Komponente wirksam zu werden. Hierzu ist eine Inkompatibilität des 3,4-Polyisoprens mit den anderen Polymeren erforderlich. Eine solche Inkompatibilität wird im Torsionsschwingungsdiagramm (nach DIN 53 445) dadurch sichtbar, daß sich ein möglichst ausgeprägtes separates Dämpfungssignal des 3,4-Polyisoprens neben der Kautschukhauptkomponente ausbildet. Bei zunehmender Verträglichkeit verschieben sich die Dämpfungssignale aufeinander zu und verschmelzen schließlich, obwohl die Signale der Einzelkomponenten für sich allein aufgrund unterschiedlicher Glasübergangstemperaturen an verschiedenen Stellen erscheinen.

Es zeigte sich nun, daß die notwendige Unverträglichkeit des 3,4-Polyisoprens eine Funktion der Molmassenverteilung sowie auch der Molmasse des Polymeren ist. Im üblichen Molmassenbereich ist die Unverträglichkeit um so eher gegeben, je enger die Molmassenverteilung ausfällt. Die Molmassenverteilung wird im allgemeinen an der Uneinheitlichkeit (U) eines Polymeren gemessen. Die Uneinheitlichkeit ist definiert als das Verhältnis des Gewichtsmittels der Molmasse ($\overline{M}w$) zum Zahlenmittel ($\overline{M}n$) minus 1, d. h. U = $\overline{M}w/\overline{M}n-1$.

Torsiogramme von Verschnitten von 3,4-Polyisoprenen, beispielsweise mit einem Vinyl-SBR-Kautschuk mit 15 % einpolymerisiertem Styrol und einem Vinylgehalt von 45 % oder auch einem der am häufigsten verwendeten Emulsions-SBR-Typen, nämlich SBR 1712, mit 23,5 % einpolymerisiertem Styrol und 37,5 Gewichtsteilen Öl, bezogen auf 100 Gewichtsteile Kautschuk, zeigen bei Uneinheitlichkeiten von 0,8 bis etwa 1,8 die gewünschte Unverträglichkeit und damit die erfindungsgemäße Verbesserung der Rutschfestigkeit; bei U-Werten von 1,9 und darüber zeigt sich nur noch eine schwach angedeutete Schulter im Dämpfungsdiagramm, was zu mangelhafter Rutschfestigkeit führt.

Die Erfindung wird durch folgende Beispiele beschrieben und belegt:

Beispiele 1 und 2 und Vergleichsbeispiele 3 bis 5

Diese in Tabelle 1 aufgeführten Beispiele demonstrieren den positiven Einfluß von 3,4-Polyisopren auf LKW-Laufflächenmischungen, die auf Basis Naturkautschuk und cis-Polybutadienkautschuk aufgebaut sind. Dabei ist besonders wichtig, daß Abrieb- und Rollwiderstand nicht wesentlich beeinträchtigt werden. Das verwendete 3,4-Polyisopren hatte einen 3,4-Gehalt von 60 %, bestimmt durch NMR-Spektroskopie, eine Mooney-Viskosität von 65, einen U-Wert von 1,4 sowie ein Zahlenmittel der Molmasse $\overline{M}n$ von 250 000. Die Mischungen sind wie in Tabelle 1 angegeben zusammengesetzt. Die Versuchsergebnisse sind ebenfalls in Tabelle 1 zusammengefaßt. Den erfindungsgemäßen Beispielen 1 und 2 ist zu entnehmen, daß 10 bis 15 Teile 3,4-Polyisopren die Rutschfestigkeit gegenüber dem Vergleichsbeispiel 3 um 7 % erhöhen, während der Rollwiderstand nur unwesentlich (um 2 bis 4 %) ansteigt. Auch die dynamische Erwärmung, gemessen mit der Kugelzermürbung nach Martens, steigt in der 200-N-Stufe nicht signifikant an. Aus den Beispielen 4 und 5 ist zwar zu entnehmen, daß die Rutschfestigkeit durch Einsatz von 25 bis 35 % 3,4-Polyisopren auf 112 bzw. 117 % weiter ansteigt, dieser Vorteil ist jedoch mit einem erheblich höheren DIN-Abrieb sowie einer wesentlich höheren Erwärmung im Kugelzermürbungstest verbunden. Die hier für die Beispiele 4 und 5 genannten Nachteile sind für einen LKW-Reifen nicht tolerierbar, so daß für diesen Einsatzzweck der Anteil 3,4-Polyisopren auf weniger als 25 % begrenzt werden muß.

Beispiele 6 und 7 und Vergleichsbeispiele 8 und 9

In den Beispielen 6 und 8 werden einer PKW-Reifenlauffläche auf Basis eines Vinyl-SBR-Kautschuks mit 40 % Vinyl-Gehalt und 20 % einpolymerisiertem Styrol 20 Teile des in Beispiel 1 näher beschriebenen 3,4-Polyisoprens zugegeben und die Wirkung bei Füllgraden von 60 Teilen Ruß und 8 Teilen Öl (Beispiel 6) bzw. 80 Teilen Ruß und 20 Teilen Öl (Beispiel 7) jeweils mit der gleichen Rezeptur, jedoch ohne 3,4-Polyisopren verglichen (Vergleichsbeispiele 8 und 9).

Tabelle 1

| | Beispiele[*] | | Vgl.-Beispiele[*] | | |
|---|---|---|---|---|---|
| | 1 | 2 | 3 | 4 | 5 |
| Naturkautschuk | 75 | 70 | 85 | 60 | 50 |
| cis-Polybutadien | 15 | 15 | 15 | 15 | 15 |
| 3,4-Polyisopren[**] | 10 | 15 | - | 25 | 35 |
| Naßrutschfestigkeit 50 km/h | 107 | 107 | 100 | 112 | 117 |
| Rollwiderstand 50 km/h | 98 | 96 | 100 | 92 | 90 |
| Kugelzermürbung n. Martens (200 N), °C | 137 | 139 | 136 | 149 | 159 |
| DIN-Abrieb, mm$^3$ | 105 | 109 | 97 | 130 | 124 |

[*] weitere Mischungsbestandteile (Gewichtsteile):

50 N 220 Ruß 4 aromatisches Öl 3 Zinkoxid 2 Stearinsäure 2 Antioxidantien 2 Harz Koresin 1,2 Beschleuniger MBS 2 Schwefel Vulkanisation 20 min bei 150 °C

[**] Glasübergangstemperatur -8 °C, $ML_4$ 65, Molmasse $\overline{M}n$ 250 000, Uneinheitlichkeit 1,4

Tabelle 2
Zusammensetzung der Mischung sowie die Ergebnisse der Labor- und
Reifenprüfungen

| | Beispiele | | Vgl.-Beispiele | |
|---|---|---|---|---|
| | 6 | 7 | 8 | 9 |
| OE-SBR (1) | 41,25 | 41,25 | 41,25 | 41,25 |
| SBR-ölfrei (2) | 50 | 50 | 70 | 70 |
| 3,4-Polyisopren (3) | 20 | 20 | - | - |
| N 234 Ruß | 60 | 80 | 60 | 80 |
| arom. Öl[*)] | 8 | 20 | 8 | 20 |
| Naßrutschfestigkeit bei 50 km/h (Index) (SBR 1712 = 100) | 114 | 113 | 108 | 106 |
| Rollwiderstand bei 80 km/h (Index) | 96 | 89 | 98 | 87 |
| Frank-Flexometer °C | 120 | 108 | 123 | 114 |
| DIN-Abrieb, mm$^3$ | 165 | 133 | 146 | 117 |

Charakterisierung der Kautschuke:

(1) OE-SBR:

Vinyl-SBR mit 40 % 1,2-Gehalt und 20 % geb. Styrol, bezogen auf Gesamtpolymer, 37,5 Gewichtsteile aromatisches Öl auf 100 Teile Polymer, ML (1+4) 100 °C : 50

(2) SBR ölfrei:

Vinyl-SBR mit 40 % 1,2-Gehalt und 20 % geb. Styrol, bezogen auf Gesamtpolymer, ML (1+4) 100 °C : 50

(3) 3,4-Polyisopren:

60 % 3,4-Gehalt nach NMR, Tg -8 °C, Molgewicht $\bar{M}n$ = 250 000, U = 1,4

\*) Weitere Mischungsbestandteile (Gewichtsteile):

3 Zinkoxid, 2 Stearinsäure, 2 Antioxidantien, 1 Harz Koresin,

Beschleuniger: 1,4 CBS, 0,3 DPG, 1,6 Schwefel

Bei der Naßrutschfestigkeit sowie dem Rollwiderstand beziehen sich die Indexzahlen auf eine Standardlauffläche auf Basis SBR 1712 mit einem Wert von 100, wobei Werte über 100 besser und solche unter 100 schlechter sind. Beim Frank-Flexometer handelt es sich um die erreichte Temperatur nach 15minütiger Beanspruchung, wobei die niedrigere Temperatur die günstigere dynamische Erwärmung und damit den niedrigeren Rollwiderstand des Reifens angibt. Der DIN-Abrieb wird in mm³ gemessen, wobei der niedrigste Wert den günstigsten Abriebwiderstand darstellt.

Beispiel 6 mit 20 Teilen 3,4-Polyisopren zeigt gegenüber dem Vergleichsbeispiele 8 ohne 3,4-IR, daß bei einem Füllgrad von 60 phr Ruß sich die Naßrutschfestigkeit von 108 auf 114 erhöht. Sowohl der Rollwiderstand bei 80 km/h als auch die dynamische Erwärmung im Frank-Flexometertest verändern sich kaum. Lediglich der DIN-Abrieb wird geringfügig erhöht.

Soll eine Erhöhung des Abriebs vermieden werden, so bietet sich eine Erhöhung des Füllgrads an, wie in Beispiel 7 und dem Vergleichsbeispiel 9 beschrieben, wobei naturgemäß der Rollwiderstand etwas ansteigt. Bei nunmehr 80 phr Ruß des Typs N-234 beträgt der Abrieb nur 133 mm³ (ohne 3,4-IR 117 mm³). Der signifikante Vorteil der Naßrutschfestigkeit bleibt voll erhalten. Während das Vergleichsbeispiel 9 aufgrund des höheren Füllgrads auf einen Index-Wert von 106, bezogen auf eine Standardlauffläche auf Basis SBR 1712 mit 70 phr N-339-Ruß kommt, wird durch den Austausch von 20 Teilen Vinyl-SBR durch 3,4-IR eine entscheidende Verbesserung des Naßrutschwiderstands auf 113 erreicht. Der Rollwiderstand hingegen unterscheidet sich kaum von dem des Vergleichsbeispiels (Index-Wert 89 zu 87).

Beispiele 10 bis 13 und Vergleichsbeispiele 14 und 15

Tabelle 3

| | Beispiele | | | | Vgl.-Bsp. | |
|---|---|---|---|---|---|---|
| | 10 | 11 | 12 | 13 | 14 | 15 |
| Mooney-Viskosität ML (1 + 4) 100 °C | 77 | 55 | 52 | 68 | 72 | 49 |
| Molmasse | | | | | | |
| in $\overline{M}w$<br>Tausend $\overline{M}n$<br>U\* = $\overline{M}w/\overline{M}n$ -1 | 629<br>286<br>1,20 | 411<br>228<br>0,81 | 513<br>223<br>1,30 | 610<br>218<br>1,79 | 651<br>223<br>1,92 | 628<br>214<br>1,94 |
| Eignung\*\* | + | + | + | (+) | - | - |
| Molmassen $\overline{M}w$, $\overline{M}n$ aus Gelpermeationschromatographie | | | | | | |

\* U = Uneinheitlichkeit

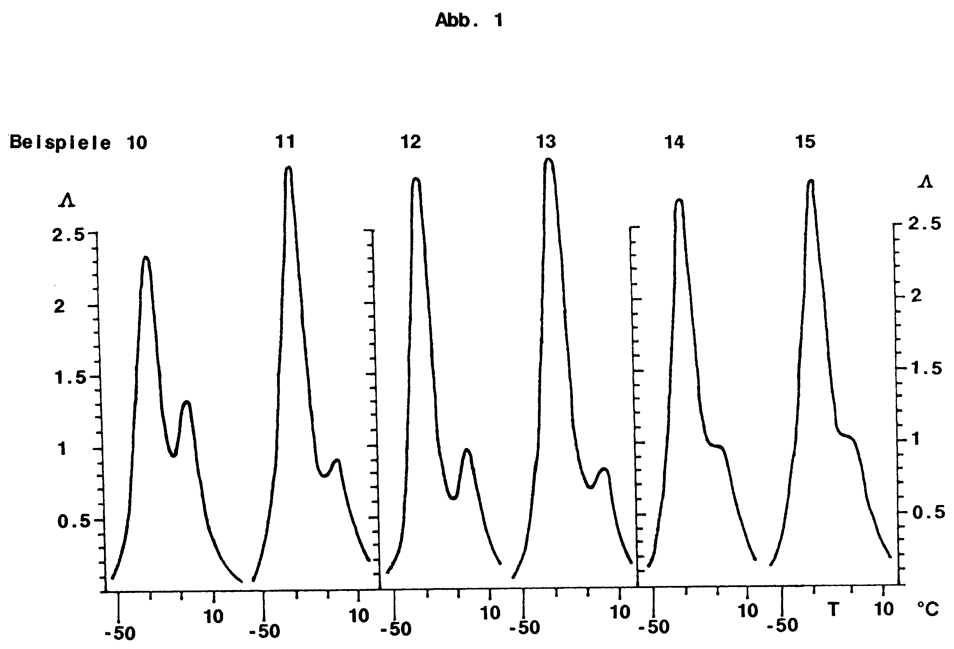

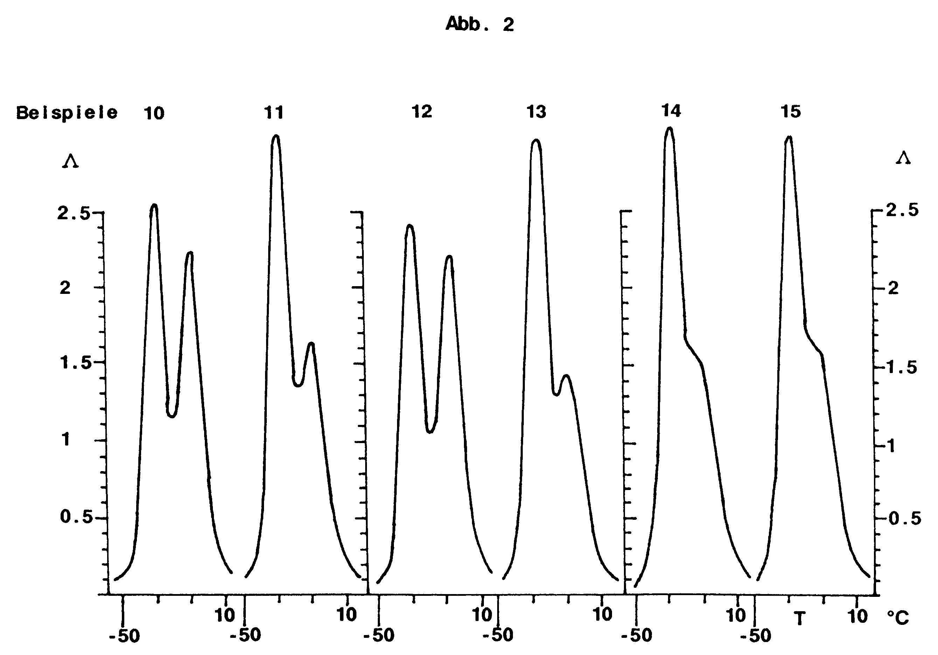

\*\* ermittelt aus dem Torsionsschwingungsdiagramm nach DIN 53 445 Verfahren A (vgl. Abbildungen 1 und 2)

Diese Beispiele illustrieren drei Erfordernisse der 3,4-Polyisopren-Antirutschkomponente hinsichtlich der Molmasse und der Uneinheitlichkeit.

Auf einem Laborwalzwerk wurden Verschnitte von je 200 g verschiedener Polyisoprene mit je 600 g von zwei verschiedenen Styrol-Butadien-Copolymer-Kautschuken hergestellt und mit einem Vulkanisationssystem, bestehend aus einem Teil CBS-Beschleuniger und zwei Teilen Schwefel, 30 min bei 150 °C vulkanisiert. Dieses Vulkanisat wurde sodann dem Torsionsschwingungsversuch nach DIN 53 445, Verfahren A unterworfen. Bei den Styrol-Butadien-Kautschuken handelt es sich um einen ölfreien Lösungs-SBR mit 45 % Vinylgehalt und 15 % einpolymerisiertem Styrol sowie um einen ölverstreckten Emulsions-SBR mit 23,5 % Styrol und 37,5 Gew.-Teilen Öl, bezogen auf 100 Teile Kautschuk, bekannt als Typ SBR 1712. Die Torsiogramme der Verschnitte mit dem 45 % Vinyl-SBR und 15 % einpolymerisiertem Styrol und den

EP 0 456 902 B1

3,4-Polyisopren-Polymeren sind in Abbildung 1 gezeigt; die der Polyisoprene mit dem Emulsions-SBR Typ 1712 in Abbildung 2. Die charakterisierenden molekularen Parameter der Polyisoprene sind in Tabelle 3 wiedergegeben. Die Diagramme der Abbildungen 1 und 2 zeigen die Eignung der 3,4-Polyisoprene als Anti-Rutschkomponente, je nach Stärke oder nach Fehlen eines ausgeprägten separaten Dämpfungssignals des 3,4-Polyisoprens.

Bei den Kurven der Abbildungen 1 und 2 handelt es sich um Auftragungen der Temperaturabhängigkeit des Dämpfungssignals der jeweiligen Verschnitte, wie sie aus dem Torsionsschwingungsversuch nach DIN erhalten werden. Aufgetragen sind das logarithmische Dekrement der Dämpfung (Lambda), das in direkter Beziehung zum Verlustfaktor tan $\delta$ steht, gegen die Temperatur. Prüfbedingungen sind ein Temperaturanstieg von 1 °/min und eine freie Schwingung des Prüfkörpers, die im Bereich von etwa 1 Hz liegt, je nach Zustand der Probe jedoch etwas variieren kann.

Mit den Polymeren der Beispiele 10, 11 und 12 sind sowohl mit dem Vinyl-SBR als auch mit dem Emulsions-SBR Typ 1712 deutlich getrennte Signale der Polyisopren-Komponente sichtbar. Es handelt sich gemäß Tabelle 3 um Polymere mit Uneinheitlichkeiten von 0,8 bis 1,3, die in der Polymerisationstechnik als relativ niedrig angesehen werden können, sowie um Zahlenmittel der Molmasse von 223 000 bis 286 000. Alle drei Polymere ergeben in Verschnitten mit beiden SBR-Typen gut sichtbare Polyisopren-Dämpfungssignale, so daß diese Polymeren als Anti-Rutschkomponenten im Verschnitt mit SBR geeignet sind. Deutlich schwächer wird das Polyisoprensignal im Beispiel 13, und zwar im Verschnitt sowohl mit dem Vinyl-SBR (Abbildung 1) als auch mit SBR 1712 (Abbildung 2). Das Isopren-Polymer in Beispiel 13 hat ein Zahlenmittel der Molmasse von 218 000 und eine hohe Uneinheitlichkeit von 1,79. Hier ist ein Grenzfall erreicht, in welchem das Signal des Polyisoprens namentlich mit dem E-SBR-Typ 1712 nur noch sehr schwach in Erscheinung tritt. Die Grenze zwischen geeigneten und ungeeigneten Isopren-Polymeren kann nicht sehr scharf gezogen werden, weil mehrere Faktoren daran beteiligt sind, wie von uns gefunden und hier beschrieben, nämlich das Molmassenmittel $\overline{M}n$ und die Uneinheitlichkeit U, d. h. die Molmassenverteilung. Bei enger Molmassenverteilung (U = 1,4 oder noch darunter) kann das Zahlenmittel der Molmasse auch noch unter 218 000 liegen. Ein Wert von $\overline{M}n$ = 200 000 sollte jedoch für eine gute Rutschfestigkeit selbst bei enger Molmassenverteilung (U = unter 1,4) nicht unterschritten werden. Liegt die Uneinheitlichkeit bei höheren Werten bis zu 1,8, so erfüllt ein Polyisopren noch den erfindungsgemäßen Zweck, wenn sein Molmassenmittel ($\overline{M}n$) einen Mindestwert von 220 000 nach GPC aufweist.

Andererseits ist bei hohen Uneinheitlichkeitswerten von 1,9 und darüber selbst bei einem Zahlenmittel der Molmasse über 220 000 keine ausreichende Ausbildung des Isopren-Signals im Torsiogramm mehr gegeben und dementsprechend keine gute Rutschfestigkeitswirkung mehr zu erwarten. Ungeeignete Isopren-Polymere, trotz erfindungsgemäßer Glasübergangstemperatur, sind in den Vergleichsbeispielen 14 und 15 beschrieben. Im Vergleichsbeispiel 14 wird ein 3,4-Polyisopren mit einem Molmassenmittel $\overline{M}n$ von 223 000 und einer Uneinheitlichkeit von 1,92 im Verschnitt mit Vinyl-SBR (Abbildung 1) und Emulsions-SBR Typ 1712 (Abbildung 2) im Torsionsschwingungsversuch untersucht. Man sieht in beiden Fällen, daß das Dämpfungssignal des 3,4-Polyisoprens nur noch als Schulter angedeutet ist. Ein solches Polymer ist als Anti-Rutschkomponente nicht mehr geeignet.

In Vergleichsbeispiel 15 wurde ein Isopren-Polymer mit vergleichbarer Uneinheitlichkeit (U = 1,94), jedoch mit noch niedrigerer Molmasse (Zahlenmittel $\overline{M}n$ = 214 000) verwendet. Dieses Polymer hatte eine Mooney-Viskosität von nur 49. Diese noch ungünstigeren Werte führten im Verschnitt mit beiden SBR-Typen zu einem noch schwächeren Polyisoprensignal (Abbildung 1 und 2), welches nur noch als schwache Schulter angedeutet ist. Dieses Ergebnis zeigt das Polymer aus Vergleichsbeispiel 15 ebenfalls als ungeeignet für den erfindungsgemäßen Zweck.

**Patentansprüche**

**1.** Kautschukmischung für eine Reifenlauffläche mit verbesserter Naßrutschfestigkeit, bestehend aus 5 bis 35 Gewichtsteilen, vorzugsweise 10 bis 20 Gewichtsteilen, eines 3,4-Polyisoprens und 95 bis 65 bzw. 90 bis 80 Gewichtsteilen eines herkömmlichen Kautschuks, wie Styrol-Butadien-Kautschuk (in Lösung oder in Emulsion polymerisiert), Polybutadien-Kautschuk, Naturkautschuk oder Verschnitte dieser Kautschuke, sowie den üblichen Füllstoffen, Ölen, Hilfsmitteln und Vulkanisationsmitteln,
dadurch gekennzeichnet,
daß das 3,4-Polyisopren
   a) einen 3,4-Gehalt von 55 bis 75 %, bestimmt durch NMR-Spektroskopie,
   b) eine Glasübergangstemperatur von 0 bis -25 °C, vorzugsweise -5 bis -16 °C, bestimmt durch DSC bei einer Erwärmungsrate von 10 K/min,

c) eine Molmasse (Zahlenmittel $\overline{M}n$), bestimmt durch Gelpermeationschromatographie von 220 000 oder höher und

d) eine Uneinheitlichkeit (U) unter 1,8 aufweist, wobei die Uneinheitlichkeit durch die Formel U = $\overline{M}w/\overline{M}n$-1 und die molekularen Parameter durch Gelpermeationschromatographie bestimmt werden.

2. Kautschukmischung nach Anspruch 1,
dadurch gekennezeichnet,
daß das 3,4-Polyisopren

a) einen 3,4-Gehalt von 55 bis 75 %, bestimmt durch NMR-Spektroskopie,

b) eine Glasübergangstemperatur von 0 bis -25 °C, vorzugsweise -5 bis -16 °C, bestimmt durch DSC bei einer Erwärmungsrate von 10 K/min,

c) eine Molmasse (Zahlenmittel $\overline{M}n$) bestimmt durch Gelpermeationschromatographie von 200 000 bis 218 000,

d) eine Uneinheitlichkeit (U) von 1,4 oder darunter aufweist.

## Claims

1. A rubber mixture for a tyre tread having improved wet grip, comprising from 5 to 35 parts by weight, preferably from 10 to 20 parts by weight, of a 3,4-polyisoprene and respectively from 95 to 65 parts by weight or from 90 to 80 parts by weight of a conventional rubber, such as styrene-butadiene rubber (polymerised in solution or in emulsion), polybutadiene rubber, natural rubber or blends of these rubbers, and conventional fillers, oils, auxiliaries and vulcanising agents, characterised in that the 3,4-polyisoprene has

a) a 3,4-content of 55 to 75%, determined by NMR spectroscopy,

b) a glass-transition temperature of from 0 to -25°C, preferably from -5 to -16°C, determined by DSC at a warming rate of 10 K/min,

c) a molecular weight (number average $\overline{M}n$), determined by gel permeation chromatography, of 220,000 or greater, and

d) a nonuniformity (U) of less than 1.8, where the nonuniformity is determined from the formula U = $\overline{M}w/\overline{M}n$-1, and the molecular parameters are determined by gel permeation chromatography.

2. A rubber mixture of the type specified in claim 1, characterised in that the 3,4-polyisoprene has

a) a 3,4-content of 55 to 75%, determined by NMR spectroscopy,

b) a glass-transition temperature of from 0 to -25°C, preferably from -5 to -16°C, determined by DSC at a warming rate of 10 K/min,

c) a molecular weight (number average $\overline{M}n$), determined by gel permeation chromatography, of from 200,000 to 218,000,

d) a nonuniformity (U) of 1.4 or less.

## Revendications

1. Mélange caoutchouteux destiné à la surface de roulement d'un pneumatique d'une résistance améliorée au dérapage sur sol humide, constitué par 5 à 35 parties en poids, de préférence par 10 à 20 parties en poids d'un 3,4-poly-isoprène et par 95 à 65, respectivement par 90 à 80 parties en poids d'un caoutchouc courant comme le caoutchouc de styrène et de butadiène (polymérisé en solution ou en émulsion), le caoutchouc de polybutadiène, le caoutchouc naturel ou des coupes de ces caoutchoucs, ainsi que les charges usuelles, des huiles, des adjuvants et des agents de vulcanisation, caractérisé en ce que
le 3,4-poly-isoprène présente :

a) une teneur en 3,4 de 55 à 75 %, déterminée par spectroscopie de résonance nucléaire magnétique,

b) une température de transition vitreuse de zéro à -25°C, de préférence de -5 à -16°C, déterminée par DSC avec un degré d'échauffement de 10 C/mn.

c) une masse molaire (moyenne numérique $\overline{M}n$), déterminée par chromatographie de perméation sur gel, de 220 000 ou plus, et

d) une hétérogénéité (U) inférieure à 1,8, cette hétérogénéité étant déterminée par la formule :

$$U = \overline{M}w/\overline{M}n - 1$$

et les paramètres moléculaires étant déterminés par chromatographie de perméation sur gel.

2. Mélange caoutchouteux selon la revendication 1,
caractérisé en ce que
le 3,4-poly-isoprène présente :
a) une teneur en 3,4 de 55 à 75 %, déterminée par spectroscopie de résonance nucléaire magnétique,
b) une température de transition vitreuse de zéro à -25°C, de préférence de -5 à -16°C, déterminée par DSC pour un taux d'échauffement de 10 C/mn,
c) une masse molaire (moyenne numérique $\overline{M}n$), déterminée par chromatrographie de perméation sur gel, de 200 000 à 218 000,
d) une hétérogénéité (U) de 1,4 ou au-dessous.

**Abb. 1**

Abb. 2